# FASCICULE DE BREVET EUROPEEN

(11) **EP 2 847 112 B1**
(45) Date de publication et mention de la délivrance du brevet: **10.07.2019**
(21) Numéro de dépôt: 13750260.5
(22) Date de dépôt: 07.05.2013
(51) Int. Cl.: B65G 49/06, B65D 21/02, B65D 85/48, D06F 57/08

(54) **CHEVALET POUR LE STOCKAGE ET/OU LE TRANSPORT DE PANNEAUX DE VERRE DE GRANDES DIMENSIONS**
GESTELL ZUM LAGERN UND/ODER TRANSPORTIEREN VON GROSSEN GLASSCHEIBEN
STAND FOR STORING AND/OR TRANSPORTING GLASS PANELS OF LARGE DIMENSIONS

(30) Priorité: 11.05.2012 BE 201200317
(43) Date de publication de la demande: 18.03.2015
(73) Titulaire: AGC Glass Europe, 1348 Louvain-La-Neuve (BE)
(72) Inventeur: PICCININNO, Michel, B-5101 Erpent (BE); CAREME, Jean-Charles, B-2650 Edegem (BE); CRUYSMANS, Harold, B-1200 Bruxelles (BE); ZUCCARINI, Valeriano, B-6760 Virton (BE)
(74) Mandataire: Le Vaguerèse, Sylvain Jacques
(86) Numéro de dépôt international: PCT/EP2013/001348
(87) Numéro de publication internationale: WO 2013/167263

(56) Documents cités:
- AU-A1- 2010 200 919
- AU-A1- 2010 200 919
- BE-A- 664 531
- CN-Y- 2 772 919
- DE-A1- 2 318 159
- DE-U1-202006 016 590
- FR-A1- 2 955 839
- US-A- 3 887 078
- US-A- 4 095 769
- US-A- 4 304 336
- US-A- 5 915 570
- US-B1- 6 510 950

## Description

### 1. Domaine de l'invention

L'invention concerne un chevalet pour le stockage et/ou le transport de panneaux de verre de grandes dimensions. Plus particulièrement, l'invention concerne un chevalet pour le stockage et/ou le transport de panneaux de verre de type PLF ou DLF.

L'invention se rapporte au domaine technique général de la manutention, du conditionnement et du transport de fret.

### 2. Solutions de l'art antérieur

Aujourd'hui afin de transporter des panneaux de verre de grandes dimensions en verre, le transport sur route, par exemple par camion seul, ou le transport multimodal combinant l'utilisation d'un camion et d'un train sont utilisés. Lorsque ces panneaux de grandes dimensions sont transportés par voie fluviale, ceux-ci sont transportés dans des containers. Malheureusement, ces types de transport ne permettent pas de transporter de grandes quantités de panneaux de grandes dimensions en un seul voyage ou une seule expédition. Par exemple, lors du transport par route, un camion ne peut transporter qu'un seul chevalet comprenant des panneaux de grandes dimensions. Par train et par voie fluviale, compte-tenu de la taille du chevalet supportant le chargement des panneaux de verre de grandes dimensions, un seul dispositif à la fois peut être disposé dans un container, limitant ainsi le nombre de panneaux de grandes dimensions pouvant être transporté.

De tels chevalets sont connus de US 3 887 078 et de AU 2010 200919.

Ainsi, pour le transport de grandes quantités de panneaux de verre de grandes dimensions, plusieurs camions ou plusieurs containers doivent être utilisés conduisant alors à un coût élevé des frais de transport et d'émission de quantités importantes de CO₂ puisque le même nombre de camion ou de container doit être utilisé pour le retour à vide puisque les supports ne sont pas démontables et/ou escamotables. Ceci s'applique tant pour un transport sur route, par exemple par camion seul, que pour un transport multimodal combinant l'utilisation d'un camion et d'un train.

Une telle situation peut être observée par exemple pour le transport de panneaux de verre PLF (Plateau à Largeur de Four ou Fabrication) ou DLF (Découpe Libre Fabrication) qui nécessite des supports particuliers du genre chevalets, garantissant l'immobilisation et la stabilité des panneaux durant leur stockage ou leur transport d'un point A vers un point B, ou du fabricant vers le client.

Ainsi, le transport et les retours à vide sont problématiques tant sur le plan économique qu'environnemental.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir un chevalet pour le stockage et/ou le transport de panneaux de verre de grandes dimensions qui soit polyvalent.

Plus précisément, un objectif de l'invention, dans au moins un de ses modes de réalisation, est de fournir un chevalet qui permette de stocker et de transporter des panneaux de grandes dimensions à la fois par route, par voie ferroviaire et par voie maritime.

Un autre objectif de l'invention, dans au moins un de ses modes de réalisation, est de fournir un chevalet pour le stockage et/ou le transport de panneaux de verre de grandes dimensions qui permette de conditionner des panneaux de grandes dimensions par route, par voie ferroviaire et par voie maritime tout en répondant aux contraintes des équipements de lignes de production desdits panneaux.

L'invention, dans au moins un de ses modes de réalisation, a encore pour objectif de fournir un chevalet pour le stockage et/ou le transport de panneaux de verre de grandes dimensions qui soit totalement escamotable.

Un autre objectif de l'invention, dans au moins un de ses modes de réalisation, est de fournir un chevalet pour le stockage et/ou le transport de panneaux de verre de grandes dimensions qui permette de transporter en une seule étape une grande quantité de panneaux de grandes dimensions tout en réduisant les coûts de transport et d'émission de CO₂.

### 4. Exposé de l'invention

Conformément à un mode de réalisation particulier, l'invention concerne un chevalet pour le stockage et/ou le transport de panneaux de verre de grandes dimensions, ledit chevalet comportant une structure horizontale de support et au moins un cadre d'appui prévu pour supporter lesdits panneaux.

Selon l'invention, un tel chevalet comprend au moins un moyen de solidarisation dudit chevalet à un autre chevalet.

Le principe général de l'invention repose sur un chevalet comportant une structure autoporteuse, polyvalente pour le stockage et/ou le transport de panneaux de verre de grandes dimensions et en particulier des panneaux de verre PLF (Plateau à largeur de Four ou Fabrication) par route, train et par mer tout en répondant aux contraintes des équipements de lignes de production.

Ainsi, l'invention repose sur une approche tout à fait nouvelle et inventive basée sur l'utilisation d'au moins un moyen de solidarisation pour lier un chevalet avec un autre chevalet de stockage et/ou de transport de panneaux de verre de grandes dimensions afin de solidariser l'ensemble tout en garantissant la stabilité de la structure comprenant au moins 2 chevalets selon l'invention durant leur transport.

Ainsi, plusieurs chevalets conditionnés avec des panneaux de verre de grandes dimensions et en particulier des panneaux de verre de type PLF peuvent être placés par exemple dans une cale de bateau tout en garantissant une très bonne stabilité de la structure (200 à 300 chevalets par voyage). La charge se trouve ainsi mieux répartie entre les différents chevalets. Le nombre de panneaux de verre de grandes dimensions pouvant être transporté en un seul voyage ou une seule expédition est alors considérablement augmenté tout en réduisant le coût lié au transport et l'impact sur l'environnement en réduisant le taux d'émission de CO₂.

Selon l'invention, le moyen de solidarisation est solidarisé à la structure horizontale de support.

Selon l'invention, le moyen de solidarisation est solidarisé à au moins une des extrémités de la structure horizontale de support.

Selon l'invention, le moyen de solidarisation comprend une partie mâle prévue pour s'emboiter dans une partie femelle du moyen de solidarisation de l'autre chevalet.

Ainsi, la partie femelle d'un premier moyen de solidarisation se trouvant sur un premier chevalet selon l'invention est introduite/emboitée dans la partie mâle d'un second moyen de solidarisation se trouvant sur un autre chevalet. Les deux chevalets se trouvent alors lier l'un à l'autre augmentant ainsi la stabilité de la structure puisque le rapport base sur hauteur est augmenté.

Selon l'invention, l'élément de solidarisation comprend un système de verrouillage de la partie mâle à la partie femelle de l'autre élément de solidarisation.

Ainsi, la solidarisation entre un chevalet selon l'invention et un autre chevalet est sécurisée voire renforcée. Le risque qu'un chevalet se désolidarise d'un autre chevalet est alors considérablement diminué voire supprimé.

Selon un exemple de réalisation du chevalet conforme à l'invention, l'élément de solidarisation est de forme allongée et a une longueur inférieure ou égale à la largeur de la structure horizontale de support.

Ainsi, l'élément de solidarisation peut être glissé de la plateforme d'un chevalet vers la structure horizontale de support d'un autre chevalet de manière à créer et renforcer la structure comprenant au moins deux chevalets conformément à l'invention.

Selon un exemple de réalisation du chevalet conforme à l'invention, la structure horizontale de support comprend au moins un élément de guidage pour faciliter le positionnement et la juxtaposition d'un chevalet conforme à l'invention près d'un autre chevalet attenant le premier chevalet afin qu'ils forment une structure solidaire et uniforme.

Ainsi, un chevalet peut être lié à au moins un autre chevalet, lesdits chevalets étant conditionnés avec des panneaux de verre de grandes dimensions, très rapidement et de manière sécurisée.

Selon un mode de réalisation préférentiel ou conforme à l'invention, le chevalet est escamotable.

Ainsi, les coûts liés au retour à vide des dispositifs conformément à l'invention sont considérablement réduits.

Selon une mise en oeuvre avantageuse de l'invention, les panneaux de grandes dimensions conditionnés sur le chevalet sont des panneaux de type PLF (Plateau à Largeur de Four ou Fabrication) ou DLF (Découpe Libre Fabrication).

L'invention concerne également une structure comprenant des chevalets tels que décrits précédemment.

L'invention concerne également l'utilisation d'au moins un chevalet selon l'invention pour transporter des panneaux de verre de grandes dimensions par voie maritime et cela notamment dans la cale d'un bateau.

Les avantages de la structure comprenant des chevalets selon l'invention ainsi que leur utilisation pour le transport par voie maritime sont les mêmes que ceux des chevalets, ils ne sont pas détaillés plus amplement.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre schématiquement selon une vue de face un exemple de réalisation d'une structure comprenant deux chevalets pour le stockage et/ou le transport de panneaux de verre de grandes dimensions solidarisés grâce à deux moyens de solidarisation.
- la figure 2 illustre schématiquement selon une vue de profil un exemple de réalisation d'un chevalet pour le stockage et/ou le transport de panneaux de verre de grandes dimensions.
- la figure 3 illustre schématiquement selon une vue de face, l'exemple de réalisation d'un moyen de solidarisation.
- la figure 4 illustre schématiquement selon une vue de profil, un structure comprenant plusieurs chevalets de la figure 2.

### 6. Description d'au moins un mode de réalisation de l'invention

Les éléments structurellement et fonctionnellement identiques, présents sur plusieurs figures distinctes, sont affectés d'une même référence numérique.

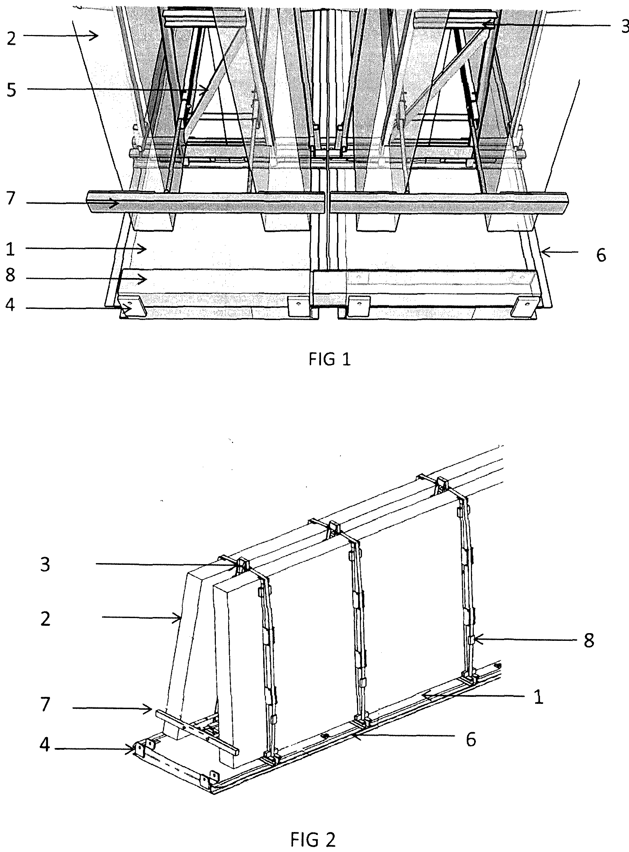

Le chevalet pour le stockage et/ou le transport de panneaux de verre de grandes dimensions conforme à l'invention et représenté par exemple aux ***figures 1 à 3*** comprend une structure horizontale de support 1. La structure horizontale de support présente par exemple la même longueur que celle des panneaux de verre de grandes dimensions 2 à transporter et une largeur suffisante pour supporter la charge que représente les panneaux de verre 2 et en particulier des panneaux de verre de type PLF ou DLF. Les dimensions de la structure horizontale de support selon l'invention permettent leur introduction à la fois dans un camion spécialement dédié au transport des panneaux de verre de grandes dimensions, dans un container lors de leur transport par voie terrestre, ferroviaire, fluviale ou directement sans être introduit dans un container dans un moyen de transport adéquat comme par exemple directement dans la cale d'un bateau. Les dimensions de la structure horizontale de support mesure par exemple plus de 6000mm de long et 1500mm de largeur. De préférence, la structure horizontale de support mesure 6934mm de long et 1530mm de largeur.

On entend par verre, tous les types de verres et matériaux transparents équivalents tels que les verres minéraux et les verres organiques. Le verre minéral peut être constitué indifféremment d'un ou plusieurs types de verres connus comme les verres sodo-calcique, les verres au bore, les verres cristallins et semi-cristallins. Le verre organique peut être un polymère ou un copolymère transparent thermodur ou thermoplastique rigide tel que, par exemple, une résine de synthèse polycarbonate, polyester ou polyvinylique transparente. Bien entendu, le panneau de verre de grandes dimensions peut être plan ou même cintré (par exemple un panneau de verre bombé).

La structure horizontale de support 1 peut être fabriquée en totalité ou en partie dans un matériau choisi parmi l'acier, le plastic et le bois. De préférence, la structure horizontale de support est en acier.

Selon l'invention, au moins un cadre d'appui 3 prévu pour supporter des panneaux de verre de grandes dimensions 2 est solidarisé à la structure horizontale de support 1. Le cadre d'appui 3 peut notamment être une structure horizontale s'étendant le long des panneaux de verre de grandes dimensions 2 à stocker/transporter. Il est entendu qu'un tel cadre 3 doit être de taille suffisante pour supporter la charge des panneaux de verre de grandes dimensions 2. Le cadre d'appui peut notamment présenter les dimensions des panneaux de verre de grandes dimensions. Selon un mode de réalisation préféré de l'invention, les panneaux de verre de grandes dimensions sont des panneaux de verre de type PLF ou DLF. On entend par « PLF » des panneaux de verre de 6 m de long par 3,21m de largeur, et par « DLF » des panneaux de 3,21m de largeur mais de longueur inférieure ou égale à 2,25m.

Selon un mode de réalisation particulier de l'invention, au moins deux cadres d'appui 3 prévus pour supporter des panneaux de verre de grandes dimensions sont solidarisés à la structure horizontale de support. Les cadres sont alors disposés, solidarisés à la structure horizontale de support à des distances l'un de l'autre permettant de supporter la charge représentée par les panneaux de verre de grandes dimensions 2. Les cadres d'appui sont de préférence des cadres en A.

Selon un mode de réalisation préféré de l'invention, quatre cadres d'appui 3 prévus pour supporter des panneaux de verre de grandes dimensions 2 sont solidarisés à la structure horizontale de support 1. Les cadres d'appui 3 sont disposés de manière à ce que la charge des panneaux de verre de grandes dimensions soit correctement répartie entre les cadres d'appui. Les cadres d'appui sont de préférence des cadres en A. Avantageusement, les cadres d'appui 3 sont positionnés, fixés tous les 140mm le long de la structure horizontale de support 1. Les cadres d'appui 3 et en particulier des cadres en A sont de préférence fabriqués en totalité ou en partie dans un matériau tel que l'acier et présentent les dimensions suivantes : 4950mm x 1520 mm x 3400mm.

Conformément à l'invention, les cadres en A 3 présentent de chaque côté une face d'appui sensiblement inclinée, laquelle est destinée à constituer un appui pour les panneaux verriers 2 par exemple de type PLF, tel que cela est montré aux **figures 1 à 4****.** La face d'appui est sensiblement orthogonale au plan d'appui incliné.

Ces cadres 3 présentent un angle d'inclinaison permettant de supporter les panneaux de verre de grandes dimensions 2 en position semi-verticale.

Ainsi, de part et d'autre des cadres d'appui 3 et en particulier des cadres d'appui en A, 71 panneaux verriers de grandes dimensions 2 peuvent être déposés soit au total 142 panneaux représentant un poids total de 26 tonnes. Le chevalet selon l'invention permet donc de stocker et/ou transporter une charge importante de panneaux de verre de grandes dimensions.

Avantageusement, les cadres en A 3 sont liés les uns aux autres grâce à des traverses 5. Par exemple, trois traverses 5 peuvent être utilisés pour lier les cadres en A 3 les uns aux autres. Selon un mode de mise en oeuvre particulier de l'invention, le chevalet peut comprendre une traverse basse supplémentaire longitudinale ou transversale, avec un système d'accroche permettant de renforcer le chevalet. Les traverses 5 peuvent être fabriquées dans un matériau choisi parmi l'acier, le bois ou le plastic. De préférence, les traverses sont fabriquées dans un matériau tel que l'acier et ont la forme d'un tube ou d'une poutrelle.

Selon un mode particulier de l'invention, les cadres d'appui 3 sont escamotables. Ceci a pour avantage qu'après le déchargement des panneaux de verre de grandes dimensions, les cadres d'appui 3 sont démontés et peuvent être très facilement transportés dans un container, réduisant ainsi le coût de retour à vide.

Avantageusement, les cadres en A 3 présentent sur leur partie supérieure, un renforcement permettant la préhension du chevalet à l'aide d'un palonnier prévu à cet effet. Ainsi, le chevalet selon l'invention peut être soulevé et donc déplacé d'un point A vers un point B à l'aide par exemple d'une grue.

Selon un mode particulier de l'invention, la structure horizontale de support 1 présente des moyens sur sa face inférieure permettant de soulever le chevalet grâce à une prise inférieure par des fourches de chariot élévateur.

Selon l'invention, le chevalet pour le stockage et/ou le transport de panneaux de verre de grandes dimensions 2 comprend au moins un moyen de solidarisation 8 qui permet de solidariser ledit chevalet à un autre chevalet. D'une manière préférée, le moyen de solidarisation 8 est solidarisé à la structure horizontale de support 1.

Avantageusement, le moyen de solidarisation 8 est solidarisé à au moins une des extrémités de la structure horizontale de support 1. Selon un mode de réalisation particulier de l'invention, le moyen de solidarisation 8 est de forme allongée et présente une longueur inférieure ou égale à la largeur de la structure horizontale de support 1. Par exemple, le moyen de solidarisation 8 est sous forme d'un tube ou d'une barre de longueur inférieure ou égale à la largeur de la structure horizontale de support 1 et de largeur suffisante pour supporter les frictions entre 2 chevalets lié l'un à l'autre. Un moyen de solidarisation selon l'invention mesure 1520 mm de longueur et 140mm de largeur.

Il est entendu que le moyen de solidarisation 8 peut présenter des tailles et des formes différentes. Le moyen de solidarisation 8 doit permettre de stabiliser la structure comprenant au moins un chevalet lié à un autre chevalet. En effet, le moyen de solidarisation 8 qui solidarise un chevalet à un autre chevalet permet d'augmenter le rapport base/hauteur et ainsi favoriser la stabilité de de la structure comprenant au moins 2 chevalets lié l'un à l'autre au moyen de solidarisation 8 selon l'invention durant le transport des panneaux de verre de grandes dimensions 2.

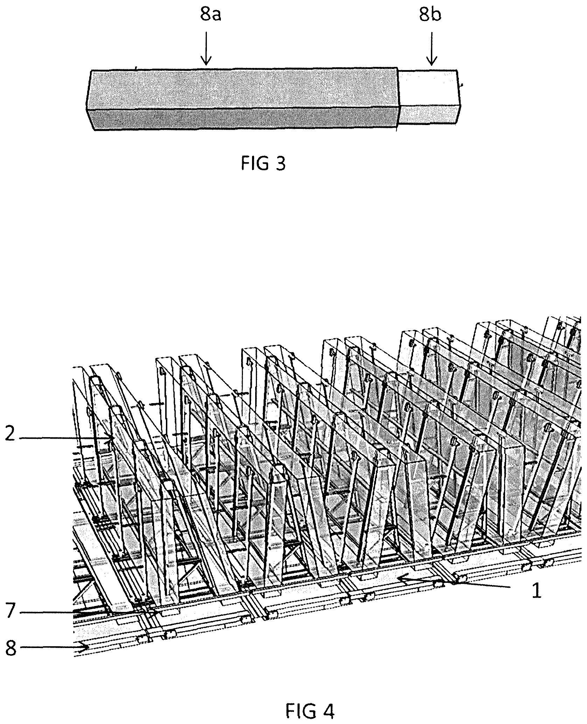

Selon un mode de réalisation particulier de l'invention, le moyen de solidarisation 8 comprend une partie mâle 8a prévue pour s'emboiter dans une partie femelle 8b du moyen de solidarisation d'un autre chevalet. Selon un exemple de réalisation conforme à l'invention, la partie mâle d'un premier moyen de solidarisation présente une forme de manière à pouvoir s'adapter, s'emboiter facilement dans la partie femelle d'un autre moyen de solidarisation disposé sur un autre chevalet qui lui est attenant. En effet, le premier moyen de solidarisation 8 en s'emboitant dans un autre moyen de solidarisation disposé sur un autre chevalet attenant au premier chevalet permet ainsi de lier/solidariser les deux chevalets ensembles renforçant ainsi la stabilité de l'ensemble. Ainsi, l'ensemble, comprenant au moins deux chevalets conformément à l'invention, peut être transporté de manière sécurisé même si celui-ci n'est pas disposé dans un container. Un tel moyen de solidarisation 8 est représenté notamment dans la ***figure 3******.*** Selon un mode préféré de l'invention, le moyen de solidarisation 8 est situé à chaque extrémité de la structure horizontale de support.

Selon un exemple de réalisation conforme à l'invention, le moyen de solidarisation 8 comprend un système de verrouillage qui permet de verrouiller la partie mâle 8a du moyen de solidarisation disposé sur la structure horizontale de support 1 d'un chevalet à la partie femelle 8b d'un autre moyen de solidarisation 8 disposé sur la structure horizontale de support 1 d'un autre chevalet. Ainsi, ce système de verrouillage permet de garder solidarisés plusieurs chevalets entre eux durant le transport malgré les mouvements occasionnés par le mode de transport, évitant ainsi que les différents chevalets transportés en une seule expédition, par exemple dans la cale d'un bateau ne se désolidarisent et s'entrechoquent entrainant ainsi de la casse. Le système de verrouillage peut par exemple prendre la forme de goupille.

Avantageusement, le moyen de solidarisation 8 comprend un moyen de préhension qui facilite ainsi la manipulation et le positionnement dudit moyen de solidarisation. Le moyen de préhension peut prendre la forme d'un U inversé positionné sur la face supérieure dudit moyen de préhension.

Selon une variante conforme à l'invention, la structure horizontale de support 1 peut comprendre au moins un organe de positionnement 4 pour faciliter l'introduction et le glissement de la partie mâle 8a du moyen de solidarisation d'un chevalet dans la partie femelle 8b d'un autre moyen de solidarisation sur le chevalet attenant ledit chevalet. L'organe de positionnement peut par exemple prendre la forme d'un U inversé en acier solidarisé à la structure horizontale de support 1. Bien entendu, tout organe de positionnement apte à remplir ce rôle peut être utilisé. La forme et la taille de l'organe de positionnement 4 dépendra de la forme et la taille du moyen de solidarisation 8. Un exemple d'un organe de positionnement 4 selon l'invention est notamment illustré dans les ***figures 1 et 2******.***

Selon un mode particulier de l'invention, la structure horizontale de support 1 peut comprendre au moins un élément de guidage 6. D'une manière préférée, l'élément de guidage 6 est situé le long de structure horizontale de support 1 et de chaque côté de ladite structure horizontale 1. L'élément de guidage 6 permet notamment de correctement positionner et juxtaposer un chevalet conforme à l'invention près d'un autre chevalet afin qu'ils forment une structure solidaire et uniforme. L'élément de guidage 6 permet notamment de maintenir dans leur position les chevalets durant le transport des panneaux de verre de grandes dimensions 2. L'élément de guidage 6 peut par exemple prendre la forme d'une gouttière dans laquelle va venir glisser et s'emboiter l'élément de guidage situé sur la partie horizontale de support 1 d'un autre chevalet. Bien entendu, tout moyen de guidage 6 apte à remplir ce rôle peut être utilisé. Un exemple de moyen de guidage 6 est notamment illustré dans les ***figures 1 et 2******.***

Pour protéger les panneaux verriers de grandes dimensions 2 lors de leur transport grâce au chevalet selon l'invention, ledit chevalet est muni de divers accessoires tels que des coins en caoutchouc, des sangles de maintien 8, un système de réglage de l'inclinaison des traverses (non représentés)...

Avantageusement, les panneaux de verre 2 sont immobilisés sur le chevalet grâce à au moins une cale 9 positionnée de chaque côté des panneaux de verre de grandes dimensions. La cale 9 s'étend sur la largeur de la structure horizontale de support 1. La cale 9 est de préférence montée sur le cadre d'appui 3. Un telle configuration est par exemple illustrée aux ***figures 1 et 2******.*** Selon un mode particulier de l'invention, la cale 9 peut prendre la forme d'une barre ou d'une poutrelle, fabriquée dans un matériau tel que l'acier. La cale 9 présente de préférence une longueur au moins égale à la largeur de la structure horizontale de support.

Selon une variante conforme à l'invention, les cadres d'appui 3 pour supporter les panneaux de verre 2, les traverses 5, ainsi que les moyens de solidarisation sont escamotables. Ainsi, le retour à vide des chevalets peut se faire dans des containers tels que des containers de camion ou des containers destinés au transport ferroviaire ou fluviale, réduisant ainsi le coût de retour à vide des chevalets.

Ainsi, le chevalet selon l'invention pour le stockage et/ou le transport sécurisés de panneaux de verre de grandes dimensions permet de réduire le coût de leur transport. Les conditions de transport d'une grande quantité de panneaux de verre de grandes dimensions sont donc optimisées et sécurisées.

En particulier, l'Homme du Métier pourra apporter toute variante dans la forme des cadres d'appui 3 des panneaux de verre de grandes dimensions à stocker et/ou transporter, dans le nombre de traverses 5 utiles pour renforcer le chevalet conforme à l'invention.

De même, la forme du moyen de solidarisation 8 n'est pas limité à un moyen de solidarisation de forme allongée.

L'invention s'applique également au stockage et/ou le transport de panneaux de grandes dimensions fabriqués dans un matériau autre que le verre.

## Revendications

1. Chevalet pour le stockage et/ou le transport de panneaux de verre de grandes dimensions (2), ledit chevalet comportant une structure horizontale de support (1) et au moins un cadre d'appui (3) prévu pour supporter lesdits panneaux, **caractérisé en ce qu'**il comprend au moins un moyen de solidarisation (8) dudit chevalet à un autre chevalet, ledit moyen de solidarisation (8) est solidarisé à la structure horizontale de support (1) et est solidarisé à au moins une des extrémité de la structure horizontale de support (1)., ledit moyen de solidarisation comprenant une partie mâle (8a) prévue pour s'emboiter dans une partie femelle (8b) du moyen de solidarisation de l'autre chevalet ; et un système de verrouillage de ladite partie mâle (8a) dans ladite partie femelle (8b).

2. Chevalet selon l'une quelconque des revendications précédentes, **caractérisé en ce que** le moyen de solidarisation (8) est de forme allongée et présente une longueur inférieure ou égale à la largueur de la structure horizontale de support (1).

3. Chevalet selon l'une quelconque des revendications précédentes, **caractérisé en ce que** la structure horizontale de support (1) comprend au moins un élément de guidage (6) pour faciliter la solidarisation du chevalet avec l'autre chevalet,

4. Chevalet selon l'une quelconque des revendications précédentes, **caractérisé en ce qu'**il est escamotable.

5. Chevalet selon l'une quelconque des revendications précédentes, **caractérisé en ce que** les panneaux de grandes dimensions (2) sont des panneaux de verre de type PLF ou DLF.

6. Structure comprenant au moins deux chevalets selon l'une quelconque des revendications 1 à 5 solidarisés entre eux grâce audits moyens de solidarisation (8).

7. Utilisation d'au moins un chevalet selon l'une quelconque des revendications 1 à 5 pour transporter des panneaux verriers de grandes dimensions (2) par voie maritime.

## Patentansprüche

1. Gestell zum Lagern und/oder Transportieren von großen Glasscheiben (2), wobei das Gestell eine horizontale Tragstruktur (1) und mindestens einen Stützrahmen (3) umfasst, der dazu vorgesehen ist, die Scheiben zu tragen, **dadurch gekennzeichnet, dass** es mindestens ein Mittel (8) zur Verbindung des Gestells mit einem weiteren Gestell umfasst, wobei das Verbindungsmittel (8) mit der horizontalen Tragstruktur (1) verbunden ist und mit mindestens einem der Enden der horizontalen Tragstruktur (1) verbunden ist, wobei das Verbindungsmittel ein Einsteckteil (8a), das dazu vorgesehen ist, sich in ein Aufnahmeteil (8b) des Verbindungsmittels des anderen Gestells einzufügen, und ein System zur Verriegelung des Einsteckteils (8a) in dem Aufnahmeteil (8b) umfasst.

2. Gestell nach einem der vorhergehenden Ansprüche, **dadurch gekennzeichnet, dass** das Verbindungsmittel (8) längliche Form hat und eine Länge kleiner oder gleich der Breite der horizontalen Tragstruktur (1) aufweist.

3. Gestell nach einem der vorhergehenden Ansprüche, **dadurch gekennzeichnet, dass** die horizontale Tragstruktur (1) mindestens ein Führungselement (6) umfasst, um die Verbindung des Gestells mit dem anderen Gestell zu erleichtern.

4. Gestell nach einem der vorhergehenden Ansprüche, **dadurch gekennzeichnet, dass** es einziehbar ist.

5. Gestell nach einem der vorhergehenden Ansprüche, **dadurch gekennzeichnet, dass** die großen Scheiben (2) Glasscheiben vom Typ PLF oder DLF sind.

6. Struktur, umfassend mindestens zwei Gestelle nach einem der Ansprüche 1 bis 5, die miteinander durch die Verbindungsmittel (8) verbunden sind.

7. Verwendung mindestens eines Gestells nach einem der Ansprüche 1 bis 5, um große Glasscheiben (2) auf dem Meeresweg zu transportieren.

## Claims

1. Stand for storing and/or transporting large glass panels (2), said stand comprising a horizontal support structure (1) and at least one supporting frame (3) designed to support said panels, **characterized in that** it comprises at least one means (8) for fastening said stand to another stand, said fastening means (8) is fastened to the horizontal support structure (1) and is fastened to at least one of the ends of the horizontal support structure (1), said fastening means comprising a male part (8a) designed to slot into a female part (8b) of the fastening means of the other stand; and a system for locking said male part (8a) in said female part (8b) .

2. Stand according to any one of the preceding claims, **characterized in that** the fastening means (8) shows an elongated shape and is shorter than or the same length as the width of the horizontal support structure (1).

3. Stand according to any one of the preceding claims, **characterized in that** the horizontal support structure (1) comprises at least one guiding element (6) in order to facilitate fastening the stand to the other stand.

4. Stand according to any one of the preceding claims, **characterized in that** it is collapsible.

5. Stand according to any one of the preceding claims, **characterized in that** the large panels (2) are PLF or DLF glass panels.

6. Structure comprising at least two stands according to any one of claims 1 to 5 fastened to each other by means of said fastening means (8).

7. Use of at least one stand according to any one of claims 1 to 5 for maritime transport of large glass panels (2).
